# EUROPÄISCHE PATENTSCHRIFT

(11) **EP 3 299 909 B1**
(45) Veröffentlichungstag und Bekanntmachung des Hinweises auf die Patenterteilung: **27.08.2025**
(21) Anmeldenummer: 17188164.2
(22) Anmeldetag: 28.08.2017
(51) Int. Cl.: G05B 9/02, H01H 47/00

(54) **SICHERHEITSSCHALTUNG ZUM FEHLERSICHEREN ABSCHALTEN EINER GEFAHRBRINGENDEN TECHNISCHEN ANLAGE**
SAFETY CIRCUIT FOR THE FAIL-SAFE SHUTDOWN OF A DANGEROUS TECHNICAL INSTALLATION
CIRCUIT DE SÉCURITÉ PERMETTANT LA COMMUTATION SANS ERREUR D'UNE INSTALLATION TECHNIQUE DANGEREUSE

(30) Priorität: 21.09.2016 DE 102016117821
(43) Veröffentlichungstag der Anmeldung: 28.03.2018
(73) Patentinhaber: Pilz GmbH & Co. KG, 73760 Ostfildern (DE)
(72) Erfinder: Zinser, Christoph, 73760 Ostfildern (DE)
(74) Vertreter: Manske, Jörg

(56) Entgegenhaltungen:
- EP-A1- 2 720 094
- DE-A1- 10 011 211

## Beschreibung

Die vorliegende Erfindung betrifft eine Sicherheitsschaltung zum fehlersicheren Abschalten einer gefahrbringenden technischen Anlage mit einer Anzahl n ≥ 2 abschaltbarer Anlagenbaugruppen.

In modernen technischen Anlagen, wie zum Beispiel industriellen Produktionsanlagen und Fertigungsstraßen, Transport- und Förderanlagen, werden Betriebsabläufe in einem zunehmenden Maße automatisiert gesteuert. Derartige Anlagen weisen eine zentrale Betriebssteuerungseinrichtung auf, die Soll- und Prozessgrößen der Anlage erhält und auf dieser Basis mittels eines in der Betriebssteuerungseinrichtung implementierten Steuerungsprogramms entsprechende Steuersignale generiert, mittels derer Aktoren der Anlage betätigt werden können.

Neben der Steuerung des eigentlichen Betriebsablaufs der technischen Anlage spielen darüber hinaus auch Sicherheitsaspekte eine gewichtige Rolle. In diesem Zusammenhang geht es darum, die von den einzelnen Anlagenbaugruppen ausgehenden Gefährdungen für Menschen, die sich in der Nähe dieser Anlagenbaugruppen aufhalten, zu vermeiden. Zum Beispiel werden Anlagenbaugruppen, die automatisierte Bewegungen ausführen können, mittels geeigneter Schutzbarrieren, Lichtschranken, Trittmatten oder dergleichen abgeschirmt. Ferner können zum Schutz von Personen auch Schutztüren, Schutzklappen oder dergleichen eingesetzt werden, die eine Betätiger-Sensor-Kombination umfassen, mittels derer ein Öffnungsvorgang zuverlässig erkannt werden kann, so dass die gesamte Anlage beziehungsweise zumindest eine gefahrbringende Anlagenbaugruppe der Anlage abgeschaltet beziehungsweise in einen für Menschen gefahrlosen Zustand überführt werden kann. Darüber hinaus ist es auch bekannt, technische Anlagen mit Not-Ausbeziehungsweise Not-Halt-Tastern/Schaltern auszurüsten, bei deren Betätigung die gesamte Anlage beziehungsweise zumindest eine der gefahrbringenden Anlagenbaugruppen der Anlage abgeschaltet oder in anderer Weise in einen für Menschen gefahrlosen Zustand überführt werden kann. Zu diesem Zweck werden im Stand der Technik entsprechende Sicherheitsschaltungen verwendet, wie sie zum Beispiel aus der EP 1 363 306 A2 oder der DE 10 2004 020 995 A1 bekannt sind.

In Fertigungsstraßen ist es häufig erforderlich, dass mehrere Sicherheitsschaltgeräte, die einzelne gefahrbringende Anlagenbaugruppen überwachen und im Gefährdungsfall einen sicheren Abschaltvorgang der betreffenden Anlagenbaugruppe einleiten oder diese in einen für Menschen ungefährlichen Betriebszustand überführen, miteinander verbunden sind. Eine Zielvorgabe bei der konstruktiven Auslegung der einzelnen Sicherheitsschaltgeräte besteht darin, dass alle daran angeschlossenen Anlagenbaugruppen zeitgleich abschalten, wenn an einer der Anlagenbaugruppen ein Not-Aus- beziehungsweise Not-Halt-Taster/-Schalter betätigt wird. Dabei dürfen Fehler in der Anschlussverdrahtung der Sicherheitsschaltgeräte untereinander oder in den Sicherheitsschaltgeräten selbst nicht zu einem Verlust dieser Sicherheitsfunktion oder zu einem gefahrbringenden Betriebszustand der gesamten Anlage beziehungsweise einzelner Anlagenbaugruppen führen.

Im Stand der Technik wurden bislang die einzelnen Sicherheitsschaltgeräte zum Beispiel über einen sicheren Datenbus oder mittels einer herkömmlichen Verdrahtung mehrkanaliger Ein- und Ausgänge der Sicherheitsschaltgeräte miteinander verbunden. Dieses ist mit einem relativ hohen Aufwand und demzufolge auch mit hohen Kosten verbunden.

In Sicherheitsschaltgeräten, die von der Anmelderin unter der Bezeichnung "PNOZ^{®}elog" vertrieben werden, ist eine sternförmige Kaskadierung mittels eines Impulssignals auf einer Informationsübertragungsleitung vorgesehen. Dabei kann eine Information, insbesondere eine sichere Abschaltinformation, mittels eines Senders über die Informationsübertragungsleitung nur in eine bestimmte Informationsflussrichtung übertragen werden. Das bedeutet mit anderen Worten, dass die Information von einem Sender in eine bestimmte Informationsflussrichtung übertragen und von einem oder mehreren Empfängern empfangen wird.

Aus der EP 2 720 094 A1 ist eine Sicherheitsschaltung mit einem einzelnen Sicherheitsschaltgerät bekannt. Die DE 100 11 211 A1 offenbart eine Sicherheitsschaltung mit mehreren Sicherheitsschaltgeräten.

Die vorliegende Erfindung macht es sich zur Aufgabe, eine Sicherheitsschaltung zum fehlersicheren Abschalten einer gefahrbringenden technischen Anlage mit einer Anzahl n ≥ 2 abschaltbarer Anlagenbaugruppen zur Verfügung zu stellen, die auf besonders einfache Weise ein sicheres Abschalten einer gefahrbringenden Anlage beziehungsweise ein sicheres Überführen einer gefahrbringenden Anlage in einen für Menschen ungefährlichen Zustand ermöglicht, wenn in einer Anlagenbaugruppe eine Sicherheitsanforderung vorliegt, insbesondere wenn ein Not-Ausbeziehungsweise Not-Halt-Taster/Schalter betätigt wird.

Die Lösung dieser Aufgabe liefert eine Sicherheitsschaltung der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Sicherheitsschaltung zum fehlersicheren Abschalten einer gefahrbringenden technischen Anlage mit einer Anzahl n ≥ 2 abschaltbarer Anlagenbaugruppen umfasst eine Mehrzahl von Sicherheitsschaltgeräten, die in Kommunikationsverbindung miteinander stehen und jeweils eine Fail-Safe-Steuereinheit aufweisen, wobei jeder der Fail-Safe-Steuereinheiten zumindest eine der Anlagenbaugruppen zugeordnet ist und wobei jede der Fail-Safe-Steuereinheiten dazu eingerichtet ist, Informationen über einen aktuellen Betriebszustand der mindestens einen, dieser zugeordneten Anlagenbaugruppe zu erfassen und auszuwerten, wobei die Sicherheitsschaltgeräte zur Bildung der Kommunikationsverbindung elektrisch in Reihe zueinander geschaltet sind und einen Überwachungsstromkreis bilden, so dass bei geschlossenem Überwachungsstromkreis ein elektrischer Überwachungsstrom durch die Sicherheitsschaltgeräte fließen kann, wobei jedes der Sicherheitsschaltgeräte zumindest eine Stromflussveränderungseinrichtung umfasst, die dazu eingerichtet ist, den Stromfluss innerhalb des Überwachungsstromkreises zu verändern, insbesondere den Überwachungsstromkreis zu unterbrechen, wenn von dem betreffenden Sicherheitsschaltgerät eine Sicherheitsanforderung, insbesondere eine Not-Aus- beziehungsweise Not-Halt-Information, erfasst wird, und wobei jede der Fail-Safe-Steuereinheiten dazu ausgebildet ist, bei einer Änderung, insbesondere einer Unterbrechung, des Stromflusses innerhalb des Überwachungsstromkreises ein Abschaltsignal zu erzeugen, welches das fehlersichere Abschalten der an die jeweilige Fail-Safe-Steuereinheit angeschlossenen, nicht bereits abgeschalteten Anlagenbaugruppe bewirken kann, wobei an jede der Fail-Safe-Steuereinheiten zumindest ein Sicherheitsschaltelement angeschlossen ist, das seinerseits an zumindest eine der Anlagenbaugruppen angeschlossen ist und dazu eingerichtet ist, die Anlagenbaugruppe beim Empfang des Abschaltsignals von der Fail-Safe-Steuereinheit abzuschalten, und wobei jedes der Sicherheitsschaltgeräte eine Messeinrichtung aufweist, die an die Fail-Safe-Steuereinheit angeschlossen ist und dazu ausgebildet ist, den elektrischen Stromfluss innerhalb des Überwachungsstromkreises zu überwachen und der Fail-Safe-Steuereinheit des betreffenden Sicherheitsschaltgeräts bei geschlossenem Überwachungsstromkreis und Messung des Überwachungsstroms ein erstes Eingangssignal und bei einer Unterbrechung des Überwachungsstromkreises ein zweites Eingangssignal zur Verfügung zu stellen, und wobei die Fail-Safe-Steuereinheiten so konfiguriert sind, dass sie beim Empfang des ersten Eingangssignals jeweils ein Einschaltsignal erzeugen, das ein Schließen des an die jeweilige Fail-Safe-Steuereinheit angeschlossenen Sicherheitsschaltelements bewirkt, und beim Empfang des zweiten Eingangssignals jeweils das Abschaltsignal erzeugen, das ein Öffnen des an die jeweilige Fail-Safe-Steuereinheit angeschlossenen Sicherheitsschaltelements bewirkt. Das Einschaltsignal und das Abschaltsignal, die Ausgangssignale der Fail-Safe-Steuereinheit bilden, können vorzugsweise maschinenlesbare, binäre Signale sein.

Die Sicherheitsschaltgeräte sind zur Bildung der Kommunikationsverbindung elektrisch in Reihe zueinander geschaltet und bilden einen Überwachungsstromkreis, so dass bei geschlossenem Überwachungsstromkreis ein elektrischer Überwachungsstrom durch die Sicherheitsschaltgeräte fließen kann, wobei jedes der Sicherheitsschaltgeräte zumindest eine Stromflussveränderungseinrichtung umfasst, die dazu eingerichtet ist, den Stromfluss innerhalb des Überwachungsstromkreises zu verändern, insbesondere den Überwachungsstromkreis zu unterbrechen, wenn von dem betreffenden Sicherheitsschaltgerät eine Sicherheitsanforderung, insbesondere eine Not-Aus- beziehungsweise Not-Halt-Information, erfasst wird, und wobei jede der Fail-Safe-Steuereinheiten dazu ausgebildet ist, bei einer Änderung, insbesondere einer Unterbrechung, des Stromflusses innerhalb des Überwachungsstromkreises ein Abschaltsignal zu erzeugen, welches das fehlersichere Abschalten der an die jeweilige Fail-Safe-Steuereinheit angeschlossenen, nicht bereits abgeschalteten Anlagenbaugruppe bewirken kann.

Die Idee besteht darin, dass durch eine sichere elektrische Verbindung zwischen mehreren Sicherheitsschaltgeräten, die in Form einer elektrischen Reihenschaltung ausgebildet ist, sichere Informationen, wie zum Beispiel sichere Einschalt- und Abschaltinformationen, übertragen werden können. Dabei können alle Sicherheitsschaltgeräte die sicheren Informationen gleichberechtigt über den Überwachungsstromkreis senden und empfangen. Ein Informationsfluss erfolgt somit nicht nur in einer festgelegten Informationsflussrichtung. In einem aktivierten Zustand der Sicherheitsschaltung und ohne, dass eine Sicherheitsanforderung, insbesondere eine Not-Aus- beziehungsweise Not-Halt-Information, vorliegt, fließt ein definierter Überwachungsstrom durch den Überwachungsstromkreis. Wenn eines der Sicherheitsschaltgeräte von der daran angeschlossenen Anlagenbaugruppe, wie zum Beispiel einer Maschine oder einem Roboter, eine Sicherheitsanforderung, insbesondere eine Not-Aus- beziehungsweise Not-Halt-Information, erhält und diese Information an alle übrigen Sicherheitsschaltgeräte übertragen werden soll, wird mittels der Stromflussveränderungseinrichtung des betreffenden Sicherheitsschaltgeräts der Stromfluss innerhalb des Überwachungsstromkreises verändert. Durch die Veränderung des Stromflusses innerhalb des Überwachungsstromkreises können die Fail-Safe-Steuereinheiten der übrigen Sicherheitsschaltgeräte jeweils ein Abschaltsignal erzeugen, mittels dessen die daran angeschlossenen Anlagenbaugruppen der gefahrbringenden Anlage sicher abgeschaltet werden können. Die erfindungsgemäße Sicherheitsschaltung hat den Vorteil, dass sie ohne eine aufwändige Verdrahtung der einzelnen Sicherheitsschaltgeräte eine sichere und gleichberechtigte, insbesondere auch bidirektionale, Kommunikation ermöglicht, so dass Einschalt- und Abschaltinformationen sicher übertragen werden können. Die Sicherheitsschaltgeräte der Sicherheitsschaltung sind vorzugsweise so ausgebildet, dass sie die Voraussetzungen für eine Einstufung in die Kategorie 4 (Performance Level e) der europäischen Norm EN ISO 13849-1-2009 erfüllen.

Vorzugsweise können die Stromflussveränderungseinrichtungen als Schalteinrichtungen ausgebildet sein, die dazu ausgebildet sind, den Überwachungsstromkreis selektiv zu schließen oder zu unterbrechen.

An jede der Fail-Safe-Steuereinheiten ist zumindest ein Sicherheitsschaltelement angeschlossen, das seinerseits an zumindest eine der Anlagenbaugruppen angeschlossen ist und dazu eingerichtet ist, die Anlagenbaugruppe beim Empfang des Abschaltsignals von der Fail-Safe-Steuereinheit abzuschalten. Die Sicherheitsschaltelemente können zum Beispiel als Sicherheitsrelais ausgebildet sein.

Ferner ist vorgesehen, dass jedes der Sicherheitsschaltgeräte eine Messeinrichtung aufweist, die an die Fail-Safe-Steuereinheit angeschlossen ist und dazu ausgebildet ist, den elektrischen Stromfluss innerhalb des Überwachungsstromkreises zu überwachen und der Fail-Safe-Steuereinheit des betreffenden Sicherheitsschaltgeräts bei geschlossenem Überwachungsstromkreis und Messung des Überwachungsstroms ein erstes Eingangssignal und bei einer Änderung, insbesondere einer Unterbrechung, des Stromflusses innerhalb des Überwachungsstromkreises ein zweites Eingangssignal zur Verfügung zu stellen. Die Änderung des Stromflusses innerhalb des Überwachungsstromkreises kann durch eine Messung einer elektrischen Größe, insbesondere durch Messung einer Stromänderung oder durch Messung einer Spannungsänderung, erfolgen. Die Eingangssignale, die den Fail-Safe-Steuereinheiten zur Verfügung gestellt werden, können vorzugsweise ebenfalls binäre Eingangssignale sein.

In einer zweckmäßigen Ausführungsform kann vorgesehen sein, dass jede der Messeinrichtungen zumindest einen Widerstand und eine daran angeschlossene Auswerteeinheit umfasst, die so ausgebildet ist, dass sie einen elektrischen Spannungsabfall über dem mindestens einen Widerstand bestimmen kann und in Abhängigkeit von der Größe des Spannungsabfalls das erste oder zweite Eingangssignal erzeugen kann. Ein Spannungsabfall lässt sich messtechnisch sehr einfach bestimmen und ermöglicht nicht nur die Erfassung, ob der Überwachungsstromkreis von einem der Sicherheitsschaltgeräte unterbrochen wurde, sondern auch die Erfassung von Leitungsunterbrechungen, Kurzschlüssen oder elektrischen Fremdspannungen.

Vorzugsweise können die Stromflussveränderungseinrichtungen als Transistoren, insbesondere als Feldeffekttransistoren, oder als Relais ausgebildet sein. Dadurch wird jeweils eine technisch robuste und betriebssichere Ausgestaltung der Stromflussveränderungseinrichtungen geschaffen.

Um einen definierten Stromfluss innerhalb des Überwachungsstromkreises zu erreichen, wird in einer bevorzugten Ausführungsform vorgeschlagen, dass ein erstes Sicherheitsschaltgerät der Sicherheitsschaltung eine Konstantstromquelle aufweist, die dazu eingerichtet ist, einen Konstantstrom zu erzeugen. Dadurch wird erreicht, dass ein definierter Überwachungsstrom durch den Überwachungsstromkreis fließt und mögliche Stromschwankungen, die unter Umständen als Fehler der Sicherheitsschaltung angesehen werden könnten, vermieden werden können.

In einer alternativen Ausführungsform kann auch vorgesehen sein, dass ein erstes Sicherheitsschaltgerät der Sicherheitsschaltung eine Konstantspannungsquelle aufweist, die zur Bereitstellung einer Konstantspannung ausgebildet ist. Dadurch können Effekte, die aus Schwankungen der elektrischen Versorgungsspannung resultieren und ebenfalls als Fehler interpretiert werden können, in vorteilhafter Weise vermieden werden.

In einer vorteilhaften Weiterbildung besteht die Möglichkeit, dass jedes der Sicherheitsschaltgeräte zumindest ein Speichermittel aufweist, das an die Auswerteeinheit der Messeinrichtung des betreffenden Sicherheitsschaltgeräts angeschlossen ist, wobei in dem Speichermittel ein erster Referenzspannungswert U_{ref,1} einer Referenzspannung vor dem Widerstand und ein zweiter Referenzspannungswert U_{ref,2} einer zweiten Referenzspannung hinter dem elektrischen Widerstand abrufbar gespeichert sind. Die beiden Referenzspannungswerte U_{ref,1} und U_{ref,2} aller Sicherheitsschaltgeräte können bei der Inbetriebnahme der Sicherheitsschaltung initialisiert ("eingelernt") und jeweils in den Speichermitteln der Sicherheitsschaltgeräte abrufbar gespeichert werden. Wenn es in den Sicherheitsschaltgeräten zu Abweichungen der Ist-Spannungen vor beziehungsweise hinter dem Widerstand der jeweiligen Messeinrichtung von den in den Speichermitteln abrufbar gespeicherten Referenzspannungswerten U_{ref,1} und U_{ref,2} kommt, können die Auswerteeinheiten der Messeinrichtungen entsprechende Eingangssignale erzeugen, die der Fail-Safe-Steuereinheit des betreffenden Sicherheitsschaltgeräts zur Verfügung gestellt werden. Die Fail-Safe-Steuereinheit eines jeden Sicherheitsschaltgeräts erzeugt ein Abschaltsignal, welches ein Abschalten der daran angeschlossenen Anlagenbaugruppe, insbesondere ein Öffnen des an die Fail-Safe-Steuereinheit und an die Anlagenbaugruppe angeschlossenen Sicherheitsschaltelements, bewirkt.

Um die Erkennung von Fehlern in der Sicherheitsschaltung weiter zu vereinfachen, wird in einer besonders vorteilhaften Ausführungsform vorgeschlagen, dass das erste Sicherheitsschaltgerät der Sicherheitsschaltung einen Spannungspulserzeuger aufweist, der an die Konstantspannungsquelle angeschlossen ist und dazu eingerichtet ist, definierte Spannungspulse, insbesondere 0 V-Spannungspulse, zu erzeugen, und dass jedes der Sicherheitsschaltgeräte ein Spannungspulsauswertemittel umfasst, welches dazu eingerichtet ist, die Spannungspulse zu erfassen und auszuwerten. Mit anderen Worten wird also die Spannung in definierter Weise moduliert. Wenn von einem Spannungspulsauswertemittel zumindest eines der Sicherheitsschaltgeräte keine Spannungspulse, die insbesondere 0 V-Spannungspulse sein können, oder nicht die erwarteten ("eingelernten") Spannungspulse erfasst werden, liegt ebenfalls ein Fehlerfall vor, so dass die Sicherheitsschaltgeräte einen sicheren Abschaltvorgang der Anlagenbaugruppen der gefahrbringenden Anlage einleiten können.

Um die Betriebssicherheit der Sicherheitsschaltung weiter zu erhöhen, kann in einer vorteilhaften Weiterbildung vorgesehen sein, dass jedes der Sicherheitsschaltgeräte eine Anzahl in Reihe geschalteter Stromflussveränderungseinrichtungen umfasst. Vorzugsweise können die Stromflussveränderungseinrichtungen, die zum Beispiel als Transistoren, insbesondere als Feldeffekttransistoren, oder als Relais ausgebildet sein können, beim Aktivieren der Sicherheitsschaltung getestet werden. Für eine Synchronisierung dieser Tests ist eine Adressierung der Sicherheitsschaltgeräte, die automatisch erfolgen kann oder von einem ersten Sicherheitsschaltgerät initiiert werden kann, vorteilhaft.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematisch stark vereinfachte Darstellung, die das Grundprinzip einer Sicherheitsschaltung, die gemäß der vorliegenden Erfindung ausgeführt ist, veranschaulicht,
- Fig. 2: eine schematisch vereinfachte Darstellung einer Sicherheitsschaltung, die gemäß einem ersten Ausführungsbeispiel der vorliegenden Erfindung ausgeführt ist,
- Fig. 3: eine schematisch vereinfachte Darstellung einer Sicherheitsschaltung, die gemäß einem zweiten Ausführungsbeispiel der vorliegenden Erfindung ausgeführt ist,
- Fig. 4: eine schematisch vereinfachte Darstellung einer Sicherheitsschaltung, die gemäß einem dritten Ausführungsbeispiel der vorliegenden Erfindung ausgeführt ist,
- Fig. 5: eine schematisch vereinfachte Darstellung einer Sicherheitsschaltung, die gemäß einem vierten Ausführungsbeispiel der vorliegenden Erfindung ausgeführt ist.

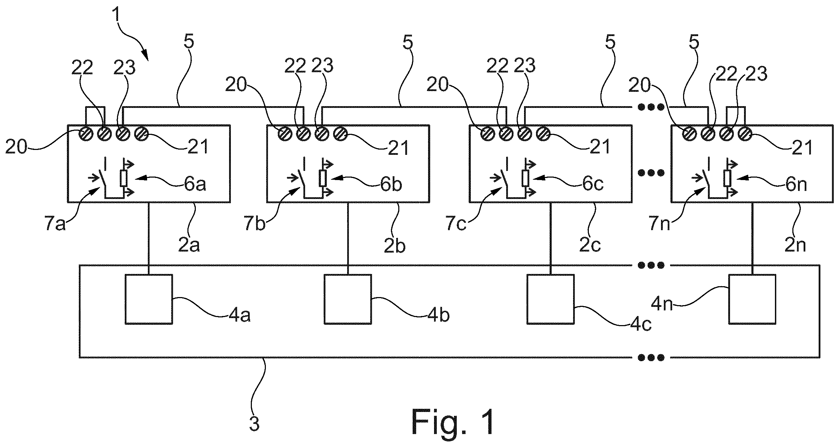

Unter Bezugnahme auf Fig. 1 umfasst eine Sicherheitsschaltung 1, die zum fehlersicheren Abschalten einer gefahrbringenden Anlage 3 mit einer Anzahl n ≥ 2 abschaltbarer Anlagenbaugruppen 4a, ..., 4n, insbesondere Maschinen oder Robotern, eingerichtet ist, eine Mehrzahl von Sicherheitsschaltgeräten 2a, ..., 2n. Diese Sicherheitsschaltgeräte 2a, ..., 2n sind vorzugsweise so ausgebildet, dass sie die Voraussetzungen für eine Einstufung in die Kategorie 4 (Performance Level e) der europäischen Norm EN ISO 13849-1-2009 erfüllen. Vorzugsweise entspricht die Anzahl der Sicherheitsschaltgeräte 2a, ..., 2n der Anzahl der Anlagenbaugruppen 4a, ..., 4n der gefahrbringenden Anlage 3, so dass jeder der Anlagenbaugruppen 4a, ..., 4n jeweils eines der Sicherheitsschaltgeräte 2a, ..., 2n zugeordnet ist. Die einzelnen Sicherheitsschaltgeräte 2a, ..., 2n sind mit Hilfe elektrischer Verbindungsleitungen 5 elektrisch in Reihe zueinander geschaltet. Die Sicherheitsschaltung 1 weist vorzugsweise einen modularen und skalierbaren Aufbau auf, so dass die Anzahl n der Sicherheitsschaltgeräte 2a, ..., 2n auf einfache Weise auch nachträglich noch verändert werden kann. Aufgrund des modularen Aufbaus der Sicherheitsschaltung 1 weist jedes der Sicherheitsschaltgeräte 2a, ..., 2n einen Spannungsanschluss 20 zum Zuführen einer Versorgungsspannung, einen Masseanschluss 21, einen Eingangsanschluss 22 sowie einen Ausgangsanschluss 23 auf.

Der Spannungsanschluss 20 des ersten Sicherheitsschaltgeräts 2a ist an eine externe Spannungsversorgungseinrichtung angeschlossen, die der Sicherheitsschaltung 1 eine Versorgungsspannung zuführen kann, die insbesondere zwischen 20 Volt und 30 Volt (DC) liegen kann. Der Spannungsanschluss 20 des ersten Sicherheitsschaltgeräts 2a ist an den Eingangsanschluss 22 des ersten Sicherheitsschaltgeräts 2a angeschlossen. Der Ausgangsanschluss 23 des ersten Sicherheitsschaltgeräts 2a ist an den Eingangsanschluss 22 des zweiten Sicherheitsschaltgeräts 2b angeschlossen. Der Ausgangsanschluss 23 des zweiten Sicherheitsschaltgeräts 2b ist an den Eingangsanschluss 22 des dritten Sicherheitsschaltgeräts 2c angeschlossen und so weiter. Der Ausgangsanschluss 23 des n-ten Sicherheitsschaltgeräts 2n ist an den Masseanschluss 21 des n-ten Sicherheitsschaltgeräts 2n angeschlossen. Auf diese Weise wird ein elektrischer Überwachungsstromkreis der Sicherheitsschaltung 1 gebildet, der durch eine gemeinsame Masseleitung der hier nicht explizit dargestellten externen Spannungsversorgungseinrichtung und des letzten (n-ten) Sicherheitsschaltgeräts 2n geschlossen wird.

Jedes der Sicherheitsschaltgeräte 2a, ..., 2n umfasst ferner eine Messeinrichtung 6a, ...,6n, mittels derer eine elektrische Größe, wie zum Beispiel eine elektrische Spannung oder ein elektrischer Strom, gemessen werden kann, sowie eine Stromflussveränderungseinrichtung 7a, ...,7n. Die Stromflussveränderungseinrichtungen 7a, ..., 7n sind in diesem und allen weiteren hier dargestellten Ausführungsbeispielen als Schalteinrichtungen ausgeführt, die selektiv geöffnet und geschlossen werden können. In einem geschlossenen Zustand dieser Stromflussveränderungseinrichtungen 7a, ...,7n fließt ein definierter Überwachungsstrom durch den Überwachungsstromkreis. Wenn eine der Stromflussveränderungseinrichtungen 7a, ..., 7n geöffnet wird, wird der Überwachungsstromkreis geöffnet, so dass kein Stromfluss innerhalb des Überwachungsstromkreises mehr vorliegt.

Jedes der Sicherheitsschaltgeräte 2a, ..., 2n der Sicherheitsschaltung 1 ist dazu eingerichtet, eine Sicherheitsanforderung, insbesondere eine Not-Aus- beziehungsweise Not-Halt-Information, der an das betreffende Sicherheitsschaltgerät 2a, ..., 2n angeschlossenen abschaltbaren Anlagenbaugruppen 4a, ..., 4n an die übrigen Sicherheitsschaltgeräte 2a, ..., 2n der Sicherheitsschaltung 1 zu übertragen beziehungsweise eine Sicherheitsanforderung, insbesondere eine Not-Aus- beziehungsweise Not-Halt-Information, von einem der übrigen Sicherheitsschaltgeräte 2a, ..., 2n zu empfangen. Wie weiter unten noch näher erläutert werden wird, sind im normalen Betriebszustand der Sicherheitsschaltung 1 alle Stromflussveränderungseinrichtungen 7a, ...,7n geschlossen, so dass das Vorliegen eines elektrischen Überwachungsstroms, der durch die in Reihe geschalteten Sicherheitsschaltgeräte 2a, ..., 2n fließt, durch Messung der elektrischen Größe mittels der integrierten Messeinrichtung 6a, ...,6n jedes der Sicherheitsschaltgeräte 2a, ..., 2n in geeigneter Weise erfasst werden kann.

Um eine Sicherheitsanforderung, insbesondere eine Not-Ausbeziehungsweise Not-Halt-Information, welche eines der Sicherheitsschaltgeräte 2a, ..., 2n erhalten hat, an die übrigen Sicherheitsschaltgeräte 2a, ..., 2n der Sicherheitsschaltung 1 weiterzuleiten, wird die Stromflussveränderungseinrichtung 7a, ..., 7n des betreffenden Sicherheitsschaltgeräts 2a, ..., 2n geöffnet. Diese Unterbrechung des elektrischen Überwachungsstromflusses innerhalb des Überwachungsstromkreises der Sicherheitsschaltung 1 kann von den Messeinrichtungen 6a, ...,6n der übrigen Sicherheitsschaltgeräte 2a, ..., 2n erfasst werden, so dass diese in der weiter unten beschriebenen Weise ebenfalls eine Sicherheitsanforderung, insbesondere eine Not-Aus- beziehungsweise Not-Halt-Funktion, in den an die betreffenden Sicherheitsschaltgeräte 2a, ..., 2n angeschlossenen Anlagenbaugruppen 4a, ..., 4n einleiten können.

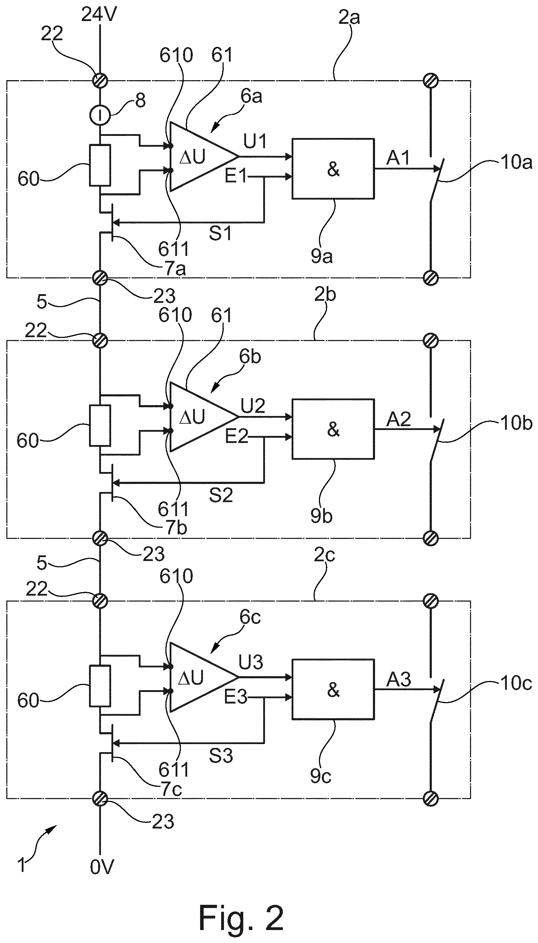

Unter Bezugnahme auf Fig. 2 bis 5 soll dieses vorstehend lediglich kurz skizzierte grundlegende Betriebskonzept der Sicherheitsschaltung 1 noch einmal ausführlicher anhand von vier Ausführungsbeispielen erläutert werden. Um die nachfolgende Darstellung übersichtlich zu halten, weisen die in Fig. 2 bis 5 dargestellten Sicherheitsschaltungen 1 jeweils drei Sicherheitsschaltgeräte 2a, 2b, 2c auf, die in der vorstehend beschriebenen Weise elektrisch in Reihe zueinander geschaltet sind. An jedes dieser Sicherheitsschaltgeräte 2a, 2b, 2c ist eine der Anlagenbaugruppen 4a, 4b, 4c angeschlossen.

Unter Bezugnahme auf Fig. 2 weist das erste Sicherheitsschaltgerät 2a in diesem Ausführungsbeispiel eine Konstantstromquelle 8 auf, die an den Eingangsanschluss 22 des ersten Sicherheitsschaltgeräts 2a angeschlossen ist, an dem die Versorgungsspannung der Sicherheitsschaltung 1, die vorliegend 24 V beträgt, anliegt. Die Messeinrichtungen 6a, 6b, 6c der Sicherheitsschaltgeräte 2a, 2b, 2c umfassen jeweils einen elektrischen Widerstand 60 sowie eine Auswerteeinheit 61, die vorliegend als Mikrocontroller mit einem ersten A/D-Eingang 610 und einem zweiten A/D-Eingang 611 ausgebildet ist. Während des Betriebs der Sicherheitsschaltung 1 kann ein Spannungsabfall ΔU über dem elektrischen Widerstand 60 mittels des ersten A/D-Eingangs 610 und des zweiten A/D-Eingangs 611 der Auswerteeinheit 61 einer jeden Messeinrichtung 6a, 6b, 6c erfasst werden und von der Auswerteeinheit 61 ausgewertet werden.

Die Stromflussveränderungseinrichtungen 7a, 7b, 7c sind in diesem Ausführungsbeispiel sowie in den übrigen Ausführungsbeispielen, die weiter unten noch beschrieben werden, jeweils als Feldeffekttransistor (FET) ausgebildet. Alternativ können die Stromflussveränderungseinrichtungen 7a, 7b, 7c auch als herkömmliche Transistoren oder als Relais ausgeführt sein.

Jedes der Sicherheitsschaltgeräte 2a, 2b, 2c weist ferner eine Fail-Safe-Steuereinheit 9a, 9b, 9c auf, die eingangsseitig an die Auswerteeinheit 61 der Messeinrichtung 6a, 6b, 6c des betreffenden Sicherheitsschaltgeräts 2a, 2b, 2c angeschlossen ist und ein UND-Gatter bildet. Wie weiter unten noch näher erläutert werden wird, sind die Auswerteeinheiten 61 dazu eingerichtet, ein binäres Eingangssignal (U1, U2, U3 = 0 beziehungsweise U1, U2, U3 = 1) zu der jeweiligen Fail-Safe-Steuereinheit 9a, 9b, 9c zu übertragen.

Die Fail-Safe-Steuereinheit 9a, 9b, 9c eines jeden Sicherheitsschaltgeräts 2a, 2b, 2c weist ferner ein oder mehrere Eingänge auf. Über diese Eingänge können der betreffenden Fail-Safe-Steuereinheit 9a, 9b, 9c Eingangssignale eines oder mehrerer Sensormittel zur Verfügung gestellt werden, die von der Fail-Safe-Steuereinheit 9a, 9b, 9c ausgewertet werden können. Dadurch ist es möglich, dass die Fail-Safe-Steuereinheit 9a, 9b, 9c jedes der Sicherheitsschaltgeräte 2a, 2b, 2c Informationen über den Betriebszustand der daran angeschlossenen Anlagenbaugruppe 4a, 4b, 4c, eine Sicherheitsanforderung, insbesondere eine Not-Ausbeziehungsweise Not-Halt-Information, erhalten kann. Die Ergebnisse der internen Eingangssignalverarbeitung bilden ebenfalls ein binäres Eingangssignal (E1, E2, E3 = 0 beziehungsweise E1, E2, E3 = 1) für das UND-Gatter der Fail-Safe-Steuereinheit 9a, 9b, 9c.

Darüber hinaus weist jedes der Sicherheitsschaltgeräte 2a, 2b, 2c in den hier gezeigten Ausführungsbeispielen jeweils ein Sicherheitsschaltelement 10a, 10b, 10c auf, das ausgangsseitig an die Fail-Safe-Steuereinheit 9a, 9b, 9c des betreffenden Sicherheitsschaltgeräts 2a, 2b, 2c angeschlossen ist. Jedes dieser Sicherheitsschaltelemente 10a, 10b, 10c ist jeweils an eine Anlagenbaugruppe 4a, 4b, 4c der gefahrbringenden Anlage 3 angeschlossen. Mittels der Sicherheitsschaltelemente 10a, 10b, 10c, die vorzugsweise als Sicherheitsrelais ausgebildet sind, können die daran angeschlossenen Anlagenbaugruppen 4a, 4b, 4c fehlersicher ein- und ausgeschaltet werden. Die Fail-Safe-Steuereinheit 9a, 9b, 9c eines jeden Sicherheitsschaltgeräts 2a, 2b, 2c ist dazu eingerichtet, ein binäres Ausgangssignal (A1, A2, A3 = 0 beziehungsweise A1, A2, A3 = 1) zum jeweiligen Sicherheitsschaltelement 10a, 10b, 10c zu übertragen. Die Ausgangssignale A1 = 0, A2 = 0 und A3 = 0 repräsentieren dabei jeweils ein Abschaltsignal für das Abschalten des betreffenden Sicherheitsschaltelements 10a, 10b, 10c. Demgegenüber repräsentieren die Ausgangssignale A1 = 0, A2 = 0 sowie A3 = 1 jeweils ein Einschaltsignal für das Einschalten des betreffenden Sicherheitsschaltelements 10a, 10b, 10c. In den Fail-Safe-Steuereinheiten 9a, 9b, 9c werden alle Sicherheitsanforderungen der daran angeschlossenen Anlagenbaugruppen 4a, 4b, 4c der gefahrbringenden Anlage 3 verarbeitet, so dass die Sicherheitsschaltelemente 10a, 10b, 10c der Sicherheitsschaltgeräte 2a, 2b, 2c je nach Ergebnis der Auswertungen angesteuert werden können.

Anhand eines Dimensionierungsbeispiels sollen nachfolgend verschiedene Betriebszustände der in Fig. 2 dargestellten Sicherheitsschaltung 1 näher erläutert werden. Dabei soll davon ausgegangen werden, dass die Konstantstromquelle 8 einen elektrischen Überwachungsstrom I = 2 mA bereitstellt und dass der elektrische Widerstand 60 eine Größe R = 500 Ohm aufweist.

### Zustand Nr. 1: Normalbetrieb

In einem störungsfreien (normalen) Betriebszustand aller Anlagenbaugruppen 4a, 4b, 4c der gefahrbringenden Anlage 3 sind alle Sicherheitsschaltgeräte 2a, 2b, 2c eingeschaltet. Die interne Auswertung der Eingangssignale der Sensormittel der Anlagenbaugruppen 4a, 4b, 4c der gefahrbringenden Anlage 3 liefert eingangsseitig für das UND-Gatter jeder Fail-Safe-Steuereinheit 9a, 9b, 9c einen Wert E1 = E2 = E3 = 1. Die Fail-Safe-Steuereinheit 9a, 9b, 9c ist auch dazu eingerichtet, die Stromflussveränderungseinrichtung 7a, 7b, 7c des betreffenden Sicherheitsschaltgeräts 2a, 2b, 2c zu öffnen oder zu schließen.

Dieses kann über ein binäres Steuersignal S1, S2, S3 erfolgen, wobei S1, S2, S3 = 1 eine geschlossene Stromflussveränderungseinrichtung 7a, 7b, 7c und S1, S2, S3 = 0 eine geöffnete Stromflussveränderungseinrichtung 7a, 7b, 7c repräsentiert.

Im normalen Betriebszustand aller an die Sicherheitsschaltgeräte 2a, 2b, 2c angeschlossenen Anlagenbaugruppen 4a, 4b, 4c gilt: E1 = E2 = E3 = 1 und S1 = S2 = S3 = 1. Das bedeutet, dass alle Stromflussveränderungseinrichtungen 7a, 7b, 7c der Sicherheitsschaltgeräte 2a, 2b, 2c und somit auch der Überwachungsstromkreis geschlossen sind, so dass der elektrische Überwachungsstrom vom ersten Sicherheitsschaltgerät 2a über das zweite Sicherheitsschaltgerät 2b zum dritten Sicherheitsschaltgerät 2c fließen kann. Dabei kommt es zu einem Spannungsabfall ΔU über dem elektrischen Widerstand 60 jeder der Messeinrichtungen 6a, 6b, 6c der Sicherheitsschaltgeräte 2a, 2b, 2c, wobei jeweils gilt: ΔU = 1 V. Die Messeinrichtungen 6a, 6b, 6c übertragen ein Eingangssignal U1 = U2 = U3 =1 zur Fail-Safe-Steuereinheit 9a, 9b, 9c, das repräsentiert, dass der Spannungsabfall ΔU dem erwarteten Wert im störungsfreien Betrieb aller Anlagenbaugruppen 4a, 4b, 4c entspricht.

Ferner sind wegen E1 = E2 = E3 = 1 und U1 = U2 = U3 =1 alle Sicherheitsschaltelemente 10a, 10b, 10c, die vorzugsweise als Sicherheitsrelais ausgebildet sind, geschlossen (d.h., es gilt für die Ausgangssignale, die von der Fail-Safe-Steuereinheit 9a, 9b, 9c eines jeden Sicherheitsschaltgeräts 2a, 2b, 2c erzeugt werden: A1 = A2 = A3 = 1), so dass alle daran angeschlossenen Anlagenbaugruppen 4a, 4b, 4c mit ihrer elektrischen Betriebsspannung versorgt werden können.

### Zustand Nr. 2: Sicheres Abschalten der Anlagenbaugruppen

Wenn zum Beispiel in der zweiten Anlagenbaugruppe 4b ein Not-Ausbeziehungsweise Not-Halt-Taster/Schalter betätigt wird und somit das Sicherheitsschaltelement 10b des zweiten Sicherheitsschaltgeräts 2b geöffnet wird, soll diese Not-Aus- beziehungsweise Not-Halt-Information auch den beiden übrigen Sicherheitsschaltgeräten 2a, 2c der Sicherheitsschaltung 1 zur Verfügung gestellt werden, so dass die daran angeschlossenen Anlagenbaugruppen 4a, 4c zeitgleich ebenfalls sicher abgeschaltet werden können. Das Ergebnis der internen Signalverarbeitung der Fail-Safe-Steuereinheit 9b des zweiten Sicherheitsschaltgeräts 2b liefert dann einen Wert E2 = 0, der die Not-Aus- beziehungsweise Not-Halt-Information repräsentiert. Um ein sicheres Abschalten der Anlagenbaugruppen 4a, 4c der beiden übrigen Sicherheitsschaltgeräte 2a, 2c zu erreichen, steuert die Fail-Safe-Steuereinheit 9b des zweiten Sicherheitsschaltgeräts 2b die Stromflussveränderungseinrichtung 7b des zweiten Sicherheitsschaltgeräts 2b derart an, dass diese geöffnet wird und der elektrische Überwachungsstromfluss vom ersten Sicherheitsschaltgerät 2a zum dritten Sicherheitsschaltgerät 2c unterbrochen wird. Die Stromflussveränderungseinrichtung 7b des zweiten Sicherheitsschaltgeräts 2b erhält dabei ein Steuersignal S2 = 0, welches ein Öffnen der betreffenden Stromflussveränderungseinrichtung 7b bewirkt und zu einer Unterbrechung des Überwachungsstromkreises der Sicherheitsschaltung 1 führt.

Dann gilt für den Spannungsabfall ΔU über den Widerständen 60 der Messeinrichtung 6a des ersten Sicherheitsschaltgeräts 2a und der Messeinrichtung 6c des dritten Sicherheitsschaltgeräts 2c jeweils: ΔU = 0 V. Dieser Spannungsabfall ΔU = 0 V wird jeweils von den Auswerteeinheiten 61 der Messeinrichtungen 6a, 6c des ersten und des dritten Sicherheitsschaltgeräts 2a, 2c erfasst. Die Auswerteeinheiten 61 der Messeinrichtungen 6a, 6c des ersten Sicherheitsschaltgeräts 2a und des dritten Sicherheitsschaltgeräts 2c erzeugen jeweils ein Eingangssignal U1 = 0 beziehungsweise U3 = 0 für das UND-Gatter der Fail-Safe-Steuereinheit 9a, 9c des ersten und dritten Sicherheitsschaltgeräts 2a, 2c. Da für das Eingangssignal der Fail-Safe-Steuereinheit 9a des ersten Sicherheitsschaltgeräts 2a gilt: U1 = 0, erzeugt die Fail-Safe-Steuereinheit 9a ein Ausgangssignal A1 = 0, welches ein Abschalten des Sicherheitsschaltelements 10a des ersten Sicherheitsschaltgeräts 9a bewirkt. Da darüber hinaus auch für das Eingangssignal der Fail-Safe-Steuereinheit 9c des dritten Sicherheitsschaltgeräts 2c gilt: U3 = 0, erzeugt die Fail-Safe-Steuereinheit 9c ein Ausgangssignal A3 = 0, welches ein Abschalten des Sicherheitsschaltelements 10c des dritten Sicherheitsschaltgeräts 9c bewirkt.

### Zustand Nr. 3: Erneutes Einschalten

Wenn ausgehend von dem vorstehend beschriebenen Betriebszustand das Sicherheitsschaltelement 10b des zweiten Sicherheitsschaltgeräts 2b wieder eingeschaltet wird, so dass die zweite Anlagenbaugruppe 4b wieder in Betrieb gesetzt wird, liefert die interne Signalverarbeitung der Fail-Safe-Steuereinheit 9b des zweiten Sicherheitsschaltgeräts 2b das Ergebnis E2 = 1. Daraufhin wird ein Schaltsignal S2 = 1 erzeugt, welches die Stromflussveränderungseinrichtung 7b des zweiten Sicherheitsschaltgeräts 2b schließt. Da die Stromflussveränderungseinrichtung 7a des ersten Sicherheitsschaltgeräts 2a und die Stromflussveränderungseinrichtung 7c des dritten Sicherheitsschaltgeräts 2c während des früher erfolgten Abschaltvorgangs nicht geöffnet wurden und sich somit weiterhin in einem geschlossenen Zustand befinden, kann der elektrische Überwachungsstrom wieder durch den geschlossenen Überwachungsstromkreis der Sicherheitsschaltung 1 von dem ersten Sicherheitsschaltgerät 2a zum dritten Sicherheitsschaltgerät 2c fließen. Somit kann an den Widerständen 60 aller Messeinrichtungen 6a, 6b, 6c wiederum ein Spannungsabfall ΔU = 1 V gemessen werden, so dass die Fail-Safe-Steuereinheit 9a, 9b, 9c eines jeden Sicherheitsschaltgeräts 2a, 2b, 2c jeweils ein Eingangssignal U1 = U2 = U3 = 1 erhält und wegen E1 = E2 = E3 = 1 entsprechende Ausgangssignale A1 = A2 = A3 = 1 liefert. Die Ausgangssignale A1 = 1 und A3 = 1 führen dazu, dass die Sicherheitsschaltelemente 10a, 10c des ersten und dritten Sicherheitsschaltgeräts 2a, 2c ebenfalls geschlossen werden, so dass die daran angeschlossenen Anlagenbaugruppen 4a, 4c der gefahrbringenden Anlage 3 ebenfalls wieder mit ihrer Betriebsspannung versorgt werden können.

### Zustand Nr. 4: Verdrahtungsfehler

Wenn zum Beispiel durch einen Verdrahtungsfehler kein elektrischer Überwachungsstrom durch die Sicherheitsschaltgeräte 2a, 2b, 2c fließt, kann an den Widerständen 60 aller Messeinrichtungen 6a, 6b, 6c kein Spannungsabfall ΔU gemessen werden. Es gilt somit: ΔU = 0 V. In diesem Fehlerfall erhält die Fail-Safe-Steuereinheit 9a, 9b, 9c eines jeden Sicherheitsschaltgeräts 2a, 2b, 2c ein Eingangssignal U1 = U2 = U3 = 0. Die Fail-Safe-Steuereinheit 9a, 9b, 9c eines jeden Sicherheitsschaltgeräts 2a, 2b, 2c liefert entsprechende Ausgangssignale A1 = A2 = A3 = 0, die ein Öffnen der Sicherheitsschaltelemente 10a, 10b, 10c und somit ein sicheres Abschalten der daran angeschlossenen Anlagenbaugruppen 4a, 4b, 4c bewirken.

Wenn die Messungen des Spannungsabfalls ΔU ergeben sollten, dass ΔU > 1 V oder 0 V < ΔU < 1 V ist, liegt ein Fehlerfall vor. Die Auswerteeinheiten 61 der Messeinrichtungen 6a, 6b, 6c erzeugen dabei ebenfalls ein Eingangssignal U1 = U2 = U3 =0, so dass die Fail-Safe-Steuereinheit 9a, 9b, 9c eines jeden Sicherheitsschaltgeräts 2a, 2b, 2c jeweils ein entsprechendes Ausgangssignal A1 = A2 = A3 = 0 liefert. Diese Ausgangssignale A1 = A2 = A3 = 0 bewirken ein Öffnen der Sicherheitsschaltelemente 10a, 10b, 10c und somit ein Abschalten der daran angeschlossenen Anlagenbaugruppen 4a, 4b, 4c.

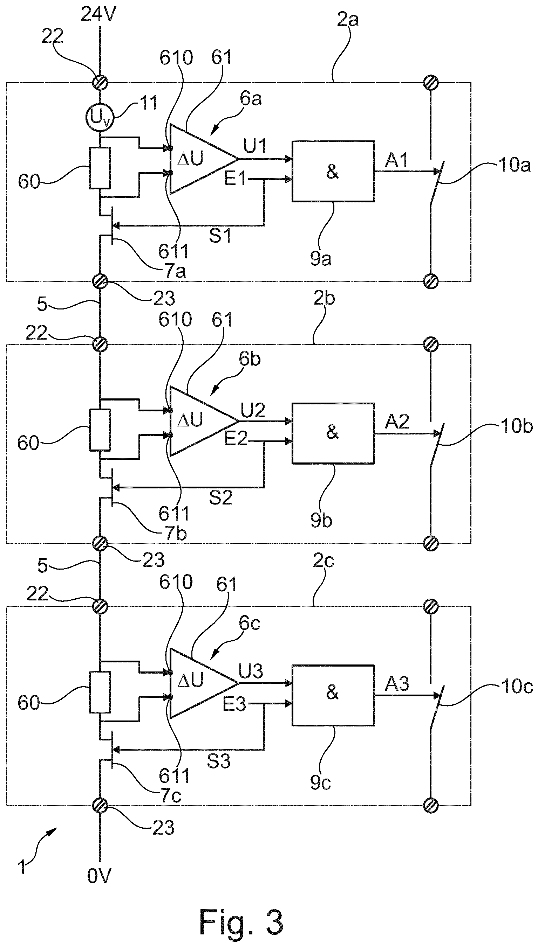

Unter Bezugnahme auf Fig. 3 soll nachfolgend ein zweites Ausführungsbeispiel einer Sicherheitsschaltung 1 näher erläutert werden. Im Unterschied zum ersten Ausführungsbeispiel weist das erste Sicherheitsschaltgerät 2a eine Konstantspannungsquelle 11 auf, die die Spannung unabhängig von der schwankenden Versorgungsspannung, die von der externen Spannungsversorgungseinrichtung gestellt wird, konstant auf einem vorgegebenen Wert hält. Beispielsweise kann mittels der Konstantspannungsquelle 11 die Spannung auf einem konstanten Wert U_{V} = 15 V gehalten werden. Die Widerstände 60 haben in diesem Ausführungsbeispiel wiederum eine Größe R = 500 Ohm.

Für den mittels der Messeinrichtungen 6a, 6b, 6c gemessenen Spannungsabfall ΔU über dem jeweiligen Widerstand 60 und die von den Auswerteeinheiten 61 zur Verfügung gestellten binären Eingangssignale gilt dann:
U = 1, sofern ΔU = 5 V
U = 0, sofern ΔU = 0 V
Fehler, sofern ΔU > 5 V oder 0 V < ΔU < 5 V.

Nachfolgend sollen wiederum verschiedene Betriebszustände der Sicherheitsschaltung 1 näher erläutert werden. Die Betriebszustände Nr. 1 bis Nr. 4 entsprechen aus technischer Sicht denjenigen des ersten Ausführungsbeispiels, so dass diese nachfolgend in verkürzter Form beschrieben werden.

### Zustand Nr. 1: Normalbetrieb

Im Normalbetrieb sind wie im ersten Ausführungsbeispiel sämtliche Sicherheitsschaltgeräte 2a, 2b, 2c sowie die daran angeschlossenen Anlagenbaugruppen 4a, 4b, 4c eingeschaltet. Über jedem Widerstand 60 der Messeinrichtungen 6a, 6b, 6c kann ein Spannungsabfall ΔU = 5 V gemessen werden, so dass für die binären Eingangssignale U1, U2, U3 analog zum ersten Ausführungsbeispiel gilt: U1 = U2 = U3 =1. Da kein Not-Aus beziehungsweise Not-Halt eingeleitet wurde, gilt ferner: E1 = E2 = E3 = 1, so dass alle Stromflussveränderungseinrichtungen 7a, 7b, 7c geschlossen sind. Es gilt somit: S1 = S2 = S3 = 1. Weiterhin gilt für die Ausgangssignale A1, A2, A3 der Fail-Safe-Steuereinheit 9a, 9b, 9c eines jeden Sicherheitsschaltgeräts 2a, 2b, 2c: A1 = A2 = A3 = 1. Das bedeutet, dass alle Sicherheitsschaltelemente 10a, 10b, 10c geschlossen sind.

### Zustand Nr. 2: Sicheres Abschalten der Anlagenbaugruppen

Wenn zum Beispiel ein Not-Aus-Taster/Schalter der zweiten Anlagenbaugruppe 4b betätigt wird und das Sicherheitsschaltelement 10b des zweiten Sicherheitsschaltgeräts 2b geöffnet wird, führt die interne Signalverarbeitung in der Fail-Safe-Steuereinheit 9b zu dem Ergebnis E2 = 0. Dieses bewirkt, dass der Stromflussveränderungseinrichtung 7b des zweiten Sicherheitsschaltgeräts 2b von der Fail-Safe-Steuereinheit 9b ein Abschaltsignal S2 = 0 zur Verfügung gestellt wird. Die Stromflussveränderungseinrichtung 7b des zweiten Sicherheitsschaltgeräts 2b wird geöffnet, so dass der Überwachungsstromfluss innerhalb des elektrischen Überwachungsstromkreises der Sicherheitsschaltung 1 vom ersten Sicherheitsschaltgerät 2a zum dritten Sicherheitsschaltgerät 2c unterbrochen wird.

Für den Spannungsabfall ΔU über dem Widerstand 60 der Messeinrichtungen 6a, 6c des ersten Sicherheitsschaltgeräts 2a und des dritten Sicherheitsschaltgeräts 2c gilt dann jeweils: ΔU = 0 V. Daraus folgt, dass die Fail-Safe-Steuereinheit 9a des ersten Sicherheitsschaltgeräts 2a ein Eingangssignal U1 = 0 erhält und ihrerseits ein Ausgangssignal A1 = 0 erzeugt, welches zu einem Öffnen des Sicherheitsschaltelements 10a des ersten Sicherheitsschaltgeräts 2a führt. In analoger Weise erhält die Fail-Safe-Steuereinheit 9c des dritten Sicherheitsschaltgeräts 2c ein Eingangssignal U3 = 0 und generiert ein Ausgangssignal A3 = 0, welches zu einem Öffnen des Sicherheitsschaltelements 10c des dritten Sicherheitsschaltgeräts 2c führt.

### Zustand Nr. 3: Erneutes Einschalten der Anlagenbaugruppen

Wenn ausgehend von dem zuvor beschriebenen Zustand das Sicherheitsschaltelement 10b des zweiten Sicherheitsschaltgeräts 2b erneut eingeschaltet wird, so dass die zweite Anlagenbaugruppe 4b wieder in Betrieb gesetzt wird, liefert die interne Signalverarbeitung der Fail-Safe-Steuereinheit 9b des zweiten Sicherheitsschaltgeräts 2b das Ergebnis E2 = 1. Daraufhin wird von der Fail-Safe-Steuereinheit 9b des zweiten Sicherheitsschaltgeräts 2b ein Schaltsignal S2 = 1 erzeugt, welches die Stromflussveränderungseinrichtung 7b des zweiten Sicherheitsschaltgeräts 2b wieder schließt. Da die Stromflussveränderungseinrichtung 7a des ersten Sicherheitsschaltgeräts 2a und die Stromflussveränderungseinrichtung 7c des dritten Sicherheitsschaltgeräts 2c während des früheren Abschaltvorgangs nicht geöffnet wurden und sich somit weiterhin in einem geschlossenen Zustand befinden, kann der elektrische Überwachungsstrom nach dem Schließen der Stromflussveränderungseinrichtung 7b des zweiten Sicherheitsschaltgeräts 2b wieder von dem ersten Sicherheitsschaltgerät 2a zum dritten Sicherheitsschaltgerät 2c fließen. Somit kann an den Widerständen 60 aller Messeinrichtungen 6a, 6b, 6c ein Spannungsabfall ΔU = 5 V gemessen werden, so dass die Fail-Safe-Steuereinheit 9a, 9b, 9c eines jeden Sicherheitsschaltgeräts 2a, 2b, 2c ein Eingangssignal U1 = U2 = U3 = 1 erhält und wegen E1 = E2 = E3 entsprechende Ausgangssignale A1 = A2 = A3 = 1 liefert. Die Ausgangssignale A1 = 1 und A3 = 1 führen dazu, dass die Sicherheitsschaltelemente 10a, 10c der ersten und dritten Sicherheitsschaltgeräts 2a, 2c ebenfalls geschlossen werden, so dass die daran angeschlossenen Anlagenbaugruppen 4a, 4c der gefahrbringenden Anlage 3 wieder mit ihrer Betriebsspannung versorgt werden können.

### Zustand Nr. 4: Verdrahtungsfehler

Wenn zum Beispiel durch einen Verdrahtungsfehler kein elektrischer Überwachungsstrom durch die Sicherheitsschaltgeräte 2a, 2b, 2c fließt, kann an den Widerständen 60 aller Messeinrichtungen 6a, 6b, 6c kein Spannungsabfall ΔU gemessen werden. Es gilt somit: ΔU = 0 V. In diesem Fehlerfall erhält die Fail-Safe-Steuereinheit 9a, 9b, 9c eines jeden Sicherheitsschaltgeräts 2a, 2b, 2c ein Eingangssignal U1 = U2 = U3 = 0. Die Fail-Safe-Steuereinheit 9a, 9b, 9c eines jeden Sicherheitsschaltgeräts 2a, 2b, 2c liefert entsprechende Ausgangssignale A1 = A2 = A3 = 0, die ein Öffnen der Sicherheitsschaltelemente 10a, 10b, 10c und somit ein sicheres Abschalten der daran angeschlossenen Anlagenbaugruppen 4a, 4b, 4c bewirken.

### Zustand Nr. 5: Fehlerzustand 0 V-Spannung am Ausgangsanschluss 23 des zweiten Sicherheitsschaltgeräts 2b beziehungsweise am Eingangsanschluss 22 des dritten Sicherheitsschaltgeräts 2c

Wenn am Ausgangsanschluss 23 des zweiten Sicherheitsschaltgeräts 2b beziehungsweise am Eingangsanschluss 22 des dritten Sicherheitsschaltgeräts 2c eine Spannung U = 0 V anliegt, wird im ersten Sicherheitsschaltgerät 2a und im zweiten Sicherheitsschaltgerät 2b jeweils ein Spannungsabfall ΔU = 7,5 V von den Messeinrichtungen 6 erfasst. Die Auswerteeinheiten 61 des ersten und zweiten Sicherheitsschaltgeräts 2a, 2b erzeugen ein Eingangssignal U1 = 0 und U2 = 0, die der Fail-Safe-Steuereinheit 9a, 9b des ersten und zweiten Sicherheitsschaltgeräts 2a, 2b zur Verfügung gestellt werden, so dass Ausgangssignale A1 = 0 und A2 = 0 generiert werden können, die ein Öffnen der Sicherheitsschaltelemente 10a, 10b des ersten und zweiten Sicherheitsschaltgeräts 2a, 2b bewirken. Zusätzlich wird eine Fehlermeldung ausgegeben.

In dem dritten Sicherheitsschaltgerät 2c ergibt sich für den Spannungsabfall über dem Widerstand 60 ein Wert von ΔU = 0 V. Dieser führt zu einem Eingangssignal U3 = 0 für die Fail-Safe-Steuereinheit 9c des dritten Sicherheitsschaltgeräts 2c, die ein Ausgangssignal A3 = 0 erzeugt, welches ein Öffnen des Sicherheitsschaltelements 10c des dritten Sicherheitsschaltgeräts 2c bewirkt.

### Zustand Nr. 6: Fehlerzustand 24 V-Spannung am Ausgangsanschluss 23 des zweiten Sicherheitsschaltgeräts 2b beziehungsweise am Eingangsanschluss 22 des dritten Sicherheitsschaltgeräts 2c

Wenn am Ausgangsanschluss 23 des zweiten Sicherheitsschaltgeräts 2b beziehungsweise am Eingangsanschluss 22 des dritten Sicherheitsschaltgeräts 2c eine Spannung U = 24 V anliegt, wird im ersten Sicherheitsschaltgerät 2a und im zweiten Sicherheitsschaltgerät 2b jeweils ein Spannungsabfall ΔU = -4,5 V von den Messeinrichtungen 6 erfasst. Die Auswerteeinheiten 61 der Messeinrichtungen 6a, 6b des ersten und zweiten Sicherheitsschaltgeräts 2a, 2b erzeugen ein Eingangssignal U1 = 0 und U2 = 0, die der Fail-Safe-Steuereinheit 9a, 9b des ersten und zweiten Sicherheitsschaltgeräts 2a, 2b zur Verfügung gestellt werden, so dass Ausgangssignale A1 = 0 und A2 = 0 generiert werden, die ein Öffnen der Sicherheitsschaltelemente 10a, 10b des ersten und zweiten Sicherheitsschaltgeräts 2a, 2b bewirken. Zusätzlich wird eine Fehlermeldung ausgegeben. Innerhalb des dritten Sicherheitsschaltgeräts 2c ergibt sich für den Spannungsabfall über dem Widerstand 60 ein Wert von ΔU = 24 V. Dieser führt zu einem Eingangssignal U3 = 0 für die Fail-Safe-Steuereinheit 9c des dritten Sicherheitsschaltgeräts 2c, die ein Ausgangssignal A3 = 0 erzeugt, welches ein Öffnen des Sicherheitsschaltelements 10c des dritten Sicherheitsschaltgeräts 2c bewirkt. Zusätzlich wird eine Fehlermeldung ausgegeben.

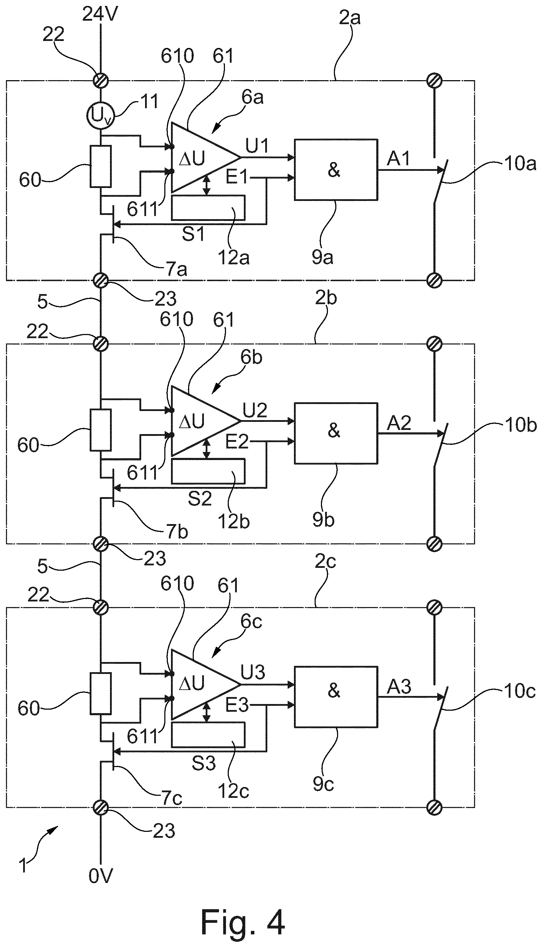

Unter Bezugnahme auf Fig. 4 soll nachfolgend ein drittes Ausführungsbeispiel der Sicherheitsschaltung 1 näher erläutert werden. Dieses Ausführungsbeispiel unterscheidet sich vom zweiten Ausführungsbeispiel dadurch, dass jedes der Sicherheitsschaltgeräte 2a, 2b, 2c zusätzlich ein Speichermittel 12a, 12b, 12c aufweist, das an die Auswerteeinheit 61 der Messeinrichtung 6a, 6b, 6c des betreffenden Sicherheitsschaltgeräts 2a, 2b, 2c angeschlossen ist. Innerhalb des Speichermittels 12a, 12b, 12c können für jedes Sicherheitsschaltgerät 2a, 2b, 2c zwei Referenzspannungswerte U_{ref,1} und U_{ref,2} abrufbar gespeichert werden. Ein erster Referenzspannungswert U_{ref,1} gibt die Größe der Spannung vor dem Widerstand 60 der Messeinrichtung 6a, 6b, 6c des jeweiligen Sicherheitsschaltgeräts 2a, 2b, 2c an. Ein zweiter Referenzspannungswert U_{ref,2} gibt die Größe der Spannung hinter dem Widerstand 60 der Messeinrichtung 6a, 6b, 6c des betreffenden Sicherheitsschaltgeräts 2a, 2b, 2c an. Die beiden Referenzspannungswerte U_{ref,1} und U_{ref,2} aller Sicherheitsschaltgeräte 2a, 2b, 2c werden bei der Inbetriebnahme der Sicherheitsschaltung 1 initialisiert ("eingelernt") und jeweils in den Speichermitteln 12a, 12b, 12c der Sicherheitsschaltgeräte 2a, 2b, 2c abrufbar gespeichert.

Die Betriebszustände Nr. 1 bis Nr. 4 entsprechen denjenigen des zweiten Ausführungsbeispiels, so dass auf diese hier nicht erneut eingegangen werden soll.

### Zustand Nr. 5: Fehlerzustand 0 V-Spannung oder 24 V-Spannung am Ausgangsanschluss 23 des zweiten Sicherheitsschaltgeräts 2b beziehungsweise am Eingangsanschluss 22 des dritten Sicherheitsschaltgeräts 2c

Wenn am Ausgangsanschluss 23 des zweiten Sicherheitsschaltgeräts 2b beziehungsweise am Eingangsanschluss 22 des dritten Sicherheitsschaltgeräts 2c beispielsweise eine Spannung U = 0 V (Betriebszustand Nr. 5 des dritten Ausführungsbeispiels) oder eine Spannung U = 24 V anliegt (Betriebszustand Nr. 6 des dritten Ausführungsbeispiels) anliegt, kommt es in allen Sicherheitsschaltgeräten 2a, 2b, 2c zu Abweichungen der Ist-Spannungen vor beziehungsweise hinter dem Widerstand 60 der jeweiligen Messeinrichtung 6a, 6b, 6c von den in den Speichermitteln 12a, 12b, 12c abrufbar gespeicherten Referenzspannungswerten U_{ref,1} und U_{ref,2}. Diese Abweichungen führen dazu, dass die Auswerteeinheiten 61 der Messeinrichtungen 6a, 6b, 6c entsprechende Eingangssignale U1 = U2 = U3 = 0 erzeugen, die der Fail-Safe-Steuereinheit 9a, 9b, 9c des betreffenden Sicherheitsschaltgeräts 2a, 2b, 2c zur Verfügung gestellt werden. Die Fail-Safe-Steuereinheit 9a, 9b, 9c eines jeden Sicherheitsschaltgeräts 2a, 2b, 2c erzeugt ein Ausgangssignal A1 = A2 = A3 = 0. Diese Ausgangssignale A1, A2, A3 führen dazu, dass die Sicherheitsschaltelemente 10a, 10b, 10c der Sicherheitsschaltgeräte 2a, 2b, 2c geöffnet werden.

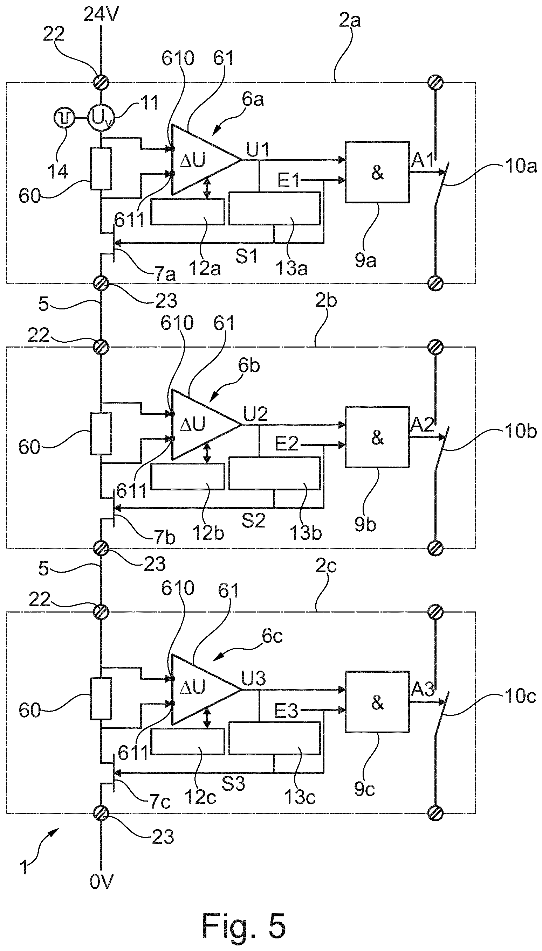

Unter Bezugnahme auf Fig. 5 soll nachfolgend ein viertes Ausführungsbeispiel der Sicherheitsschaltung 1 näher erläutert werden. Dieses Ausführungsbeispiel unterscheidet sich vom dritten Ausführungsbeispiel dadurch, dass das erste Sicherheitsschaltgerät 2a zusätzlich einen Spannungspulserzeuger 14 aufweist. Ferner umfasst jedes der Sicherheitsschaltgeräte 2a, 2b, 2c ein Spannungspulsauswertemittel 13a, 13b, 13c, welches dazu eingerichtet ist, die von dem Spannungspulserzeuger 14 erzeugten Spannungspulse, die insbesondere 0V-Spannungspulse sein können, zu erfassen und auszuwerten.

Jedes der Sicherheitsschaltgeräte 2a, 2b, 2c umfasst wiederum ein Speichermittel 12a, 12b, 12c, das an die Auswerteeinheit 61 der Messeinrichtung 6a, 6b, 6c des betreffenden Sicherheitsschaltgeräts 2a, 2b, 2c angeschlossen ist. Innerhalb des Speichermittels 12a, 12b, 12c können für jedes Sicherheitsschaltgerät 2a, 2b, 2c zwei Referenzspannungswerte U_{ref,1} und U_{ref,2} abrufbar gespeichert werden. Ein erster Referenzspannungswert U_{ref,1} gibt die Größe der Spannung vor dem Widerstand 60 der Messeinrichtung 6a, 6b, 6c des betreffenden Sicherheitsschaltgeräts 2a, 2b, 2c an. Ein zweiter Referenzspannungswert U_{ref,2} gibt die Größe der Spannung hinter dem Widerstand 60 der Messeinrichtung 6a, 6b, 6c des betreffenden Sicherheitsschaltgeräts 2a, 2b, 2c an. Die Referenzspannungswerte U_{ref,1} und U_{ref,2} aller Sicherheitsschaltgeräte 2a, 2b, 2c werden bei der Inbetriebnahme der Sicherheitsschaltung 1 wiederum initialisiert ("eingelernt") und in den Speichermitteln 12a, 12b, 12c der Sicherheitsschaltgeräte 2a, 2b, 2c abrufbar gespeichert.

Wenn die gemessenen Spannungswerte vor beziehungsweise hinter dem Widerstand 60 der Messeinrichtung 6a, 6b, 6c der Sicherheitsschaltgeräte 2a, 2b, 2c von den "eingelernten" und gespeicherten Referenzspannungswerten U_{ref,1} und U_{ref,2} abweichen, wird eine Fehlermeldung generiert. Diese Abweichungen führen dazu, dass die Auswerteeinheiten 61 entsprechende Eingangssignale U1 = U2 = U3 = 0 erzeugen, die der Fail-Safe-Steuereinheit 9a, 9b, 9c des betreffenden Sicherheitsschaltgeräts 2a, 2b, 2c zur Verfügung gestellt werden. Die Fail-Safe-Steuereinheit 9a, 9b, 9c eines jeden Sicherheitsschaltgeräts 2a, 2b, 2c erzeugt ein Ausgangssignal A1 = A2 = A3 = 0. Diese Ausgangssignale A1, A2, A3 führen dazu, dass die Sicherheitsschaltelemente 10a, 10b, 10c der Sicherheitsschaltgeräte 2a, 2b, 2c geöffnet werden. Dieses entspricht dem Betriebszustand Nr. 5 des dritten Ausführungsbeispiels.

Die Betriebszustände Nr. 1 bis Nr. 4 entsprechen ebenfalls denjenigen des dritten Ausführungsbeispiels, so dass hierauf an dieser Stelle nicht erneut eingegangen werden soll.

### Zustand Nr. 6: Fehlerzustand 5 V-Spannung am Ausgangsanschluss 23 des zweiten Sicherheitsschaltgeräts 2b beziehungsweise am Eingangsanschluss 22 des dritten Sicherheitsschaltgeräts 2c

Wenn am Ausgangsanschluss 23 des zweiten Sicherheitsschaltgeräts 2b beziehungsweise am Eingangsanschluss 22 des dritten Sicherheitsschaltgeräts 2c eine Spannung U = 5 V anliegt, werden von dem Spannungspulsauswertemittel 13c des dritten Sicherheitsschaltgeräts 2c keine Spannungspulse, die insbesondere 0 V-Spannungspulse sein können, erfasst. Die Auswerteeinheit 61 des dritten Sicherheitsschaltgeräts 2c erzeugt ein entsprechendes Eingangssignal U3 = 0 für die Fail-Safe-Steuereinheit 9c des dritten Sicherheitsschaltgeräts 2c, die wiederum ein Ausgangssignal A3 = 0 erzeugt, welches ein Öffnen des Sicherheitsschaltelements 10c des dritten Sicherheitsschaltgeräts 2c bewirkt. Ferner wird ein Schaltsignal S3 = 0 erzeugt, welches die Stromflussveränderungseinrichtung 7c des dritten Sicherheitsschaltgeräts 2c öffnet. Dadurch wird der elektrische Überwachungsstromkreis geöffnet, so dass für den Spannungsabfall über den Widerständen 60 der Messeinrichtungen 6a, 6b des ersten und zweiten Sicherheitsschaltgeräts 2a, 2b gilt: ΔU = 0 V. Die Auswerteeinheiten 61 der Messeinrichtungen 6a, 6b des ersten und zweiten Sicherheitsschaltgeräts 2a, 2b erzeugen ein Eingangssignal U1 = U2 =0, welches der Fail-Safe-Steuereinheit 9a, 9b des betreffenden Sicherheitsschaltgeräts 2a, 2b zur Verfügung gestellt wird. Die Fail-Safe-Steuereinheit 9a des ersten Sicherheitsschaltgeräts 2a erzeugt ein Ausgangssignal A1 = 0, das ein Öffnen des Sicherheitsschaltelements 10a des ersten Sicherheitsschaltgeräts 2a und somit ein Abschalten der daran angeschlossenen Anlagenbaugruppe 4a bewirkt. Analog erzeugt die Fail-Safe-Steuereinheit 9b des zweiten Sicherheitsschaltgeräts 2b ein Ausgangssignal A2 = 0, das ein Öffnen des Sicherheitsschaltelements 10b des zweiten Sicherheitsschaltgeräts 2b und somit ein Abschalten der daran angeschlossenen Anlagenbaugruppe 4b bewirkt. Diese Maßnahmen ermöglichen wiederum ein fehlersicheres Abschalten der Anlagenbaugruppen 4a, 4b, 4 der gefahrbringenden Anlage im Fehlerfall.

## Patentansprüche

1. Sicherheitsschaltung (1) zum fehlersicheren Abschalten einer gefahrbringenden technischen Anlage (3) mit einer Anzahl n ≥ 2 abschaltbarer Anlagenbaugruppen (4a, ..., 4n), umfassend eine Mehrzahl von Sicherheitsschaltgeräten (2a, ..., 2n), die in Kommunikationsverbindung miteinander stehen und jeweils eine Fail-Safe-Steuereinheit (9a, 9b, 9c) aufweisen, wobei jeder der Fail-Safe-Steuereinheiten (9a, 9b, 9c) zumindest eine der Anlagenbaugruppen (4a, ..., 4n) zugeordnet ist und wobei jede der Fail-Safe-Steuereinheiten (9a, 9b, 9c) dazu eingerichtet ist, Informationen über einen aktuellen Betriebszustand der mindestens einen, dieser zugeordneten Anlagenbaugruppe (4a, ..., 4n) zu erfassen und auszuwerten, wobei die Sicherheitsschaltgeräte (2a, ..., 2n) zur Bildung der Kommunikationsverbindung elektrisch in Reihe zueinander geschaltet sind und einen Überwachungsstromkreis bilden, so dass bei geschlossenem Überwachungsstromkreis ein elektrischer Überwachungsstrom durch die Sicherheitsschaltgeräte (2a, ..., 2n) fließen kann, wobei jedes der Sicherheitsschaltgeräte (2a, ..., 2n) zumindest eine Stromflussveränderungseinrichtung (7a, ..., 7n) umfasst, die dazu eingerichtet ist, den Stromfluss innerhalb des Überwachungsstromkreises zu verändern, insbesondere den Überwachungsstromkreis zu unterbrechen, wenn von dem betreffenden Sicherheitsschaltgerät (2a, ..., 2n) eine Sicherheitsanforderung, insbesondere eine Not-Ausbeziehungsweise Not-Halt-Information, erfasst wird, und wobei jede der Fail-Safe-Steuereinheiten (9a, 9b, 9c) dazu ausgebildet ist, bei einer Änderung, insbesondere einer Unterbrechung, des Stromflusses innerhalb des Überwachungsstromkreises ein Abschaltsignal zu erzeugen, welches das fehlersichere Abschalten der an die jeweilige Fail-Safe-Steuereinheit (9a, 9b, 9c) angeschlossenen, nicht bereits abgeschalteten Anlagenbaugruppe (4a, ..., 4n) bewirken kann, wobei an jede der Fail-Safe-Steuereinheiten (9a, 9b, 9c) zumindest ein Sicherheitsschaltelement (10a, 10b, 10c) angeschlossen ist, das seinerseits an zumindest eine der Anlagenbaugruppen (4a, ..., 4n) angeschlossen ist und dazu eingerichtet ist, die Anlagenbaugruppe (4a, ...,4n) beim Empfang des Abschaltsignals von der Fail-Safe-Steuereinheit (9a, 9b, 9c) abzuschalten, und wobei jedes der Sicherheitsschaltgeräte (2a, ..., 2n) eine Messeinrichtung (6a, 6b, 6c) aufweist, die an die Fail-Safe-Steuereinheit (9a, 9b, 9c) angeschlossen ist und dazu ausgebildet ist, den elektrischen Stromfluss innerhalb des Überwachungsstromkreises zu überwachen und der Fail-Safe-Steuereinheit (9a, 9b, 9c) des betreffenden Sicherheitsschaltgeräts (2a, ..., 2n) bei geschlossenem Überwachungsstromkreis und Messung des Überwachungsstroms ein erstes Eingangssignal und bei einer Unterbrechung des Überwachungsstromkreises ein zweites Eingangssignal zur Verfügung zu stellen, und wobei die Fail-Safe-Steuereinheiten (9a, 9b, 9c) so konfiguriert sind, dass sie beim Empfang des ersten Eingangssignals jeweils ein Einschaltsignal erzeugen, das ein Schließen des an die jeweilige Fail-Safe-Steuereinheit (9a, 9b, 9c) angeschlossenen Sicherheitsschaltelements (10a, 10b, 10c) bewirkt, und beim Empfang des zweiten Eingangssignals jeweils das Abschaltsignal erzeugen, das ein Öffnen des an die jeweilige Fail-Safe-Steuereinheit (9a, 9b, 9c) angeschlossenen Sicherheitsschaltelements (10a, 10b, 10c) bewirkt.

2. Sicherheitsschaltung (1) nach Anspruch 1, **dadurch gekennzeichnet, dass** jede der Messeinrichtungen (6a, 6b, 6c) zumindest einen Widerstand (60) und eine daran angeschlossene Auswerteeinheit (61) umfasst, die so ausgebildet ist, dass sie einen elektrischen Spannungsabfall über dem mindestens einen Widerstand (60) bestimmen kann und in Abhängigkeit von der Größe des Spannungsabfalls das erste oder zweite Eingangssignal erzeugen kann.

3. Sicherheitsschaltung (1) nach einem der Ansprüche 1 oder 2, **dadurch gekennzeichnet, dass** die Stromflussveränderungseinrichtungen (7a, ..., 7n) als Schalteinrichtungen ausgebildet sind, die dazu ausgebildet sind, den Überwachungsstromkreis selektiv zu schließen oder zu unterbrechen.

4. Sicherheitsschaltung (1) nach einem der Ansprüche 1 bis 3, **dadurch gekennzeichnet, dass** die Stromflussveränderungseinrichtungen (7a, ..., 7n) als Transistoren, insbesondere als Feldeffekttransistoren, oder als Relais ausgebildet sind.

5. Sicherheitsschaltung (1) nach einem der Ansprüche 1 bis 4, **dadurch gekennzeichnet, dass** ein erstes Sicherheitsschaltgerät (2a) der Sicherheitsschaltung (1) eine Konstantstromquelle aufweist, die dazu eingerichtet ist, einen Konstantstrom zu erzeugen.

6. Sicherheitsschaltung (1) nach einem der Ansprüche 2 bis 5, **dadurch gekennzeichnet, dass** jedes der Sicherheitsschaltgeräte (2a, ..., 2n) zumindest ein Speichermittel (12a, 12b, 12c) aufweist, das an die Auswerteeinheit (61) der Messeinrichtung (6) des betreffenden Sicherheitsschaltgeräts (2a, 2b, 2c) angeschlossen ist, wobei in dem Speichermittel (12a, 12b, 12c) ein erster Referenzspannungswert (U_{ref,1}) einer Referenzspannung vor dem Widerstand (60) und ein zweiter Referenzspannungswert (U_{ref,2}) einer Referenzspannung hinter dem elektrischen Widerstand (60) abrufbar gespeichert sind.

7. Sicherheitsschaltung (1) nach einem der Ansprüche 1 bis 6, **dadurch gekennzeichnet, dass** ein erstes Sicherheitsschaltgerät (2a) der Sicherheitsschaltung (1) eine Konstantspannungsquelle (11) aufweist, die zur Bereitstellung einer Konstantspannung ausgebildet ist.

8. Sicherheitsschaltung (1) nach Anspruch 7, **dadurch gekennzeichnet, dass** das erste Sicherheitsschaltgerät (2a) der Sicherheitsschaltung (1) einen Spannungspulserzeuger (14) aufweist, der an die Konstantspannungsquelle (11) angeschlossen ist und dazu eingerichtet ist, definierte Spannungspulse, insbesondere 0 V-Spannungspulse, zu erzeugen, und dass jedes der Sicherheitsschaltgeräte (2a, 2b, 2c) ein Spannungspulsauswertemittel (13a, 13b, 13c) umfasst, welches dazu eingerichtet ist, die Spannungspulse zu erfassen und auszuwerten.

9. Sicherheitsschaltung (1) nach einem der Ansprüche 1 bis 8, **dadurch gekennzeichnet, dass** jedes der Sicherheitsschaltgeräte (2a, ..., 2n) eine Anzahl in Reihe geschalteter Stromflussveränderungseinrichtungen (7a, ..., 7n) umfasst.

## Claims

1. Safety circuit (1) for the fail-safe shutdown of a hazardous technical installation (3) with a number n ≥ 2 of installation assemblies (4a, **...,** 4n) that are able to be shut down, comprising a plurality of safety switching devices (2a, **...,** 2n) that are communicatively connected to one another and each have a fail-safe control unit (9a, 9b, 9c), wherein at least one of the installation assemblies (4a, **...,** 4n) is assigned to each of the fail-safe control units (9a, 9b, 9c), and wherein each of the fail-safe control units (9a, 9b, 9c) is configured to capture and evaluate information regarding a present operating state of the at least one installation assembly (4a, **...,** 4n) assigned thereto, wherein the safety switching devices (2a, **...,** 2n) are electrically connected in series with one another to form the communication connection and form a monitoring circuit, with the result that an electric monitoring current is able to flow through the safety switching devices (2a, **...,** 2n) when the monitoring circuit is closed, wherein each of the safety switching devices (2a, **...,** 2n) comprises at least one current flow changing apparatus (7a, ..., 7n) that is configured to change the current flow within the monitoring circuit, in particular to interrupt the monitoring circuit if a safety demand, in particular an item of emergency switch-off or emergency stop information, is captured by the relevant safety switching device (2a, **...,** 2n), and wherein each of the fail-safe control units (9a, 9b, 9c) is designed, in the event of a change, in particular an interruption, to the current flow within the monitoring circuit, to generate a shutdown signal that is able to effect the fail-safe shutdown of the installation assembly (4a, ..., 4n) that is connected to the respective fail-safe control unit (9a, 9b, 9c) and has not already been shut down, wherein each of the fail-safe control units (9a, 9b, 9c) has at least one safety switching element (10a, 10b, 10c) connected thereto, which in turn is connected to at least one of the installation assemblies (4a, ...,4n) and is configured to shut down the installation assembly (4a, ...,4n) upon receiving the shutdown signal from the fail-safe control unit (9a, 9b, 9c), and wherein each of the safety switching devices (2a, ..., 2n) has a measuring apparatus (6a, 6b, 6c) that is connected to the fail-safe control unit (9a, 9b, 9c) and is designed to monitor the electric current flow within the monitoring circuit and to provide the fail-safe control unit (9a, 9b, 9c) of the relevant safety switching device (2a, ..., 2n) with a first input signal in the event of the monitoring circuit being closed and the monitoring current being measured and with a second input signal in the event of the monitoring circuit being interrupted, and wherein the fail-safe control units (9a, 9b, 9c) are configured in such a way that, upon receiving the first input signal, they each generate a swich-on signal that effects closing of the safety switching element (10a, 10b, 10c) connected to the respective fail-safe control unit (9a, 9b, 9c), and, upon receiving the second input signal, they each generate the shutdown signal that effects opening of the safety switching element (10a, 10b, 10c) connected to the respective fail-safe control unit (9a, 9b, 9c).

2. Safety circuit (1) according to Claim 1, **characterized in that** each of the measuring apparatuses (6a, 6b, 6c) comprises at least one resistor (60) and an evaluation unit (61) connected thereto that is designed in such a way that it is able to determine a voltage drop across the at least one resistor (60) and is able to generate the first or second input signal depending on the magnitude of the voltage drop.

3. Safety circuit (1) according to either of Claims 1 and 2, **characterized in that** the current flow changing apparatuses (7a, ..., 7n) are in the form of switching apparatuses that are designed to selectively close or interrupt the monitoring circuit.

4. Safety circuit (1) according to one of Claims 1 to 3, **characterized in that** the current flow changing apparatuses (7a, ..., 7n) are in the form of transistors, in particular field-effect transistors, or relays.

5. Safety circuit (1) according to one of Claims 1 to 4, **characterized in that** a first safety switching device (2a) of the safety circuit (1) has a constant current source that is configured to generate a constant current.

6. Safety circuit (1) according to one of Claims 2 to 5, **characterized in that** each of the safety switching devices (2a, ..., 2n) has at least one storage means (12a, 12b, 12c) that is connected to the evaluation unit (61) of the measuring apparatus (6) of the relevant safety switching device (2a, 2b, 2c), wherein a first reference voltage value (U_{ref,1}) of a reference voltage upstream of the resistor (60) and a second reference voltage value (U_{ref,2}) of a reference voltage downstream of the electrical resistor (60) are stored in the storage means (12a, 12b, 12c) so as to be able to be retrieved.

7. Safety circuit (1) according to one of Claims 1 to 6, **characterized in that** a first safety switching device (2a) of the safety circuit (1) has a constant voltage source (11) that is designed to provide a constant voltage.

8. Safety circuit (1) according to Claim 7, **characterized in that** the first safety switching device (2a) of the safety circuit (1) has a voltage pulse generator (14) that is connected to the constant voltage source (11) and is configured to generate defined voltage pulses, in particular 0 V voltage pulses, and **in that** each of the safety switching devices (2a, 2b, 2c) comprises a voltage pulse evaluation means (13a, 13b, 13c) that is configured to capture and evaluate the voltage pulses.

9. Safety circuit (1) according to one of Claims 1 to 8, **characterized in that** each of the safety switching devices (2a, ..., 2n) comprises a number of current flow changing apparatuses (7a, ..., 7n) connected in series.

## Revendications

1. Circuit de sécurité (1) pour la coupure sécurisée d'une installation technique dangereuse (3) ayant un nombre n ≥ 2 de modules système (4a, ..., 4n) susceptibles d'être coupés, comprenant une pluralité d'appareils (2a, ..., 2n) de coupure sécurisée qui sont en liaison de communication les uns avec les autres et qui comprennent chacun une unité (9a, 9b, 9c) de commande à sécurité intégrée, chacune des unités (9a, 9b, 9c) de commande à sécurité intégrée étant associée à au moins l'un des modules système (4a, ..., 4n) et chacune des unités (9a, 9b, 9c) de commande à sécurité intégrée étant conçue pour enregistrer et évaluer des informations sur un état de fonctionnement actuel dudit au moins un module système (4a, **...,** 4n) qui lui est associé, les appareils (2a **...,** 2n) de coupure sécurisée étant connectés électriquement en série les uns avec les autres pour former la liaison de communication et formant un circuit électrique de surveillance, de sorte que, lorsque le circuit électrique de surveillance est fermé, un courant de surveillance électrique peut circuler à travers les appareils (2a, ..., 2n) de coupure sécurisée, chacun des appareils (2a, ..., 2n) de coupure sécurisée comprenant au moins une unité (7a, **...,** 7n) de modification du flux de courant conçue pour modifier le flux de courant à l'intérieur du circuit électrique de surveillance, en particulier pour interrompre le circuit électrique de surveillance, lorsqu'une demande de sécurité, en particulier une information d'arrêt d'urgence ou d'arrêt de secours, est détectée par l'appareil de coupure sécurisée (2a, ..., 2n) concerné, et chacune des unités (9a, 9b, 9c) de commande à sécurité intégrée étant conçue pour générer, en cas d'une modification, en particulier d'une interruption, du flux de courant à l'intérieur du circuit électrique de surveillance, un signal de coupure qui peut provoquer la coupure sécurisée intégrée du module système (4a, **...,** 4n) raccordé à l'unité (9a, 9b, 9c) de commande à sécurité intégrée respective, qui n'est pas encore coupé, au moins un élément (10a, 10b, 10c) de coupure sécurisée étant raccordé à chacune des unités (9a, 9b, 9c) de commande à sécurité intégrée, lequel est lui-même raccordé à au moins l'un des modules système (4a, ..., 4n) et étant conçu pour couper le module système (4a, ..., 4n) lors de la réception du signal de coupure provenant de l'unité (9a, 9b, 9c) de commande à sécurité intégrée, et chacun des appareils (2a, ..., 2n) de coupure sécurisée présentant un dispositif de mesure (6a, 6b, 6c) qui est raccordé à l'unité (9a, 9b, 9c) de commande à sécurité intégrée et est conçu pour surveiller le flux de courant électrique à l'intérieur du circuit électrique de surveillance et pour envoyer un premier signal d'entrée à l'unité (9a, 9b, 9c) de commande à sécurité intégrée de l'appareil de coupure sécurisée (2a, ..., 2n) concerné lorsque le circuit électrique de surveillance est fermé et que le courant de surveillance est mesuré, et pour fournir un deuxième signal d'entrée en cas d'une interruption du circuit électrique de surveillance, et les unités (9a, 9b, 9c) de commande à sécurité intégrée étant conçues pour générer, à la réception du premier signal d'entrée, chaque fois un signal d'activation qui provoque une fermeture de l'élément (10a, 10b, 10c) de coupure sécurisée raccordé à l'unité (9a, 9b, 9c) de commande à sécurité intégrée correspondante, et, à la réception du deuxième signal d'entrée, pour générer chacune le signal de coupure qui provoque une ouverture de l'élément (10a, 10b, 10c) de coupure sécurisée raccordé à l'unité (9a, 9b, 9c) de commande à sécurité intégrée respective.

2. Circuit de sécurité (1) selon la revendication 1, **caractérisé en ce que** chacun des dispositifs de mesure (6a, 6b, 6c) comprend au moins une résistance (60) et une unité d'évaluation (61) qui lui est raccordée, qui est conçue de manière à pouvoir déterminer une chute de tension électrique sur ladite au moins une résistance (60) et à pouvoir générer le premier ou le deuxième signal d'entrée en fonction de l'amplitude de la chute de tension.

3. Circuit de sécurité (1) selon l'une des revendications 1 ou 2, **caractérisé en ce que** les unités (7a, ... 7n) de modification du flux de courant sont conçues sous la forme d'unités de commutation qui sont conçues pour fermer ou interrompre sélectivement le circuit électrique de surveillance.

4. Circuit de sécurité (1) selon l'une des revendications 1 à 3, **caractérisé en ce que** les unités (7a, **...,** 7n) de modification du flux de courant sont conçues sous la forme de transistors, en particulier de transistors à effet de champ, ou sous la forme de relais.

5. Circuit de sécurité (1) selon l'une des revendications 1 à 4, **caractérisé en ce qu'**un premier appareil (2a) de coupure sécurisée du circuit de sécurité (1) comprend une source de courant constant qui est conçue pour générer un courant constant.

6. Circuit de sécurité (1) selon l'une des revendications 2 à 5, **caractérisé en ce que** chacun des appareils (2a, **...,** 2n) de coupure sécurisée comprend au moins un moyen à mémoire (12a, 12b, 12c) qui est connecté à l'unité d'évaluation (61) du dispositif de mesure (6) de l'appareil de coupure sécurisée (2a, 2b, 2c) concerné, une première valeur de tension de référence (U_{ref,1}) d'une tension de référence en amont de la résistance (60) et une deuxième valeur de tension de référence (U_{ref,2}) d'une tension de référence en aval de la résistance électrique (60) étant mémorisées de manière consultable dans le moyen à mémoire (12a, 12b, 12c).

7. Circuit de sécurité (1) selon l'une des revendications 1 à 6, **caractérisé en ce qu'**un premier appareil de coupure sécurisée (2a) du circuit de sécurité (1) comporte une source de tension constante (11) qui est conçue pour fournir une tension constante.

8. Circuit de sécurité (1) selon la revendication 7, **caractérisé en ce que** le premier appareil de coupure sécurisée (2a) du circuit de sécurité (1) comprend un générateur (14) d'impulsions de tension qui est raccordé à la source de tension constante (11) et est conçu pour générer des impulsions de tension définies, en particulier des impulsions de tension de 0V, et **en ce que** chacun des appareils de coupure sécurisée (2a, 2b, 2c) comprend un moyen (13a, 13b, 13c) d'évaluation d'impulsions de tension qui est conçu pour détecter et évaluer les impulsions de tension.

9. Circuit de sécurité (1) selon l'une des revendications 1 à 8, **caractérisé en ce que** chacun des appareils de coupure sécurisée (2a, **...,** 2n) comprend un certain nombre d'unités (7a, **...,** 7n) de modification du flux de courant montées en série.
